(19) Europäisches Patentamt
European Patent Office
Office européen des brevets

(11) EP 3 954 718 A1

(12) EUROPEAN PATENT APPLICATION
published in accordance with Art. 153(4) EPC

(43) Date of publication:
**16.02.2022 Bulletin 2022/07**

(21) Application number: **20786825.8**

(22) Date of filing: **28.01.2020**

(51) International Patent Classification (IPC):
***C08F 136/08*** *(2006.01)* ***C08F 4/6192*** *(2006.01)*

(52) Cooperative Patent Classification (CPC):
**C08F 4/6192; C08F 136/08**

(86) International application number:
**PCT/JP2020/003030**

(87) International publication number:
**WO 2020/208902 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2019 JP 2019076640**

(71) Applicant: **BRIDGESTONE CORPORATION**
**Chuo-ku**
**Tokyo 104-8340 (JP)**

(72) Inventors:
- **TAKANO, Shigenaga**
  **Tokyo 104-8340 (JP)**
- **KAITA, Shojiro**
  **Tokyo 104-8340 (JP)**

(74) Representative: **Oxley, Robin John George**
**Marks & Clerk LLP**
**15 Fetter Lane**
**London EC4A 1BW (GB)**

# (54) POLYISOPRENE PRODUCTION METHOD

(57) A method for manufacturing a polyisoprene, wherein it comprises a process of polymerizing isoprene under the presence of a polymerization catalyst composition containing a half metallocene cation complex represented by following general formula (I)

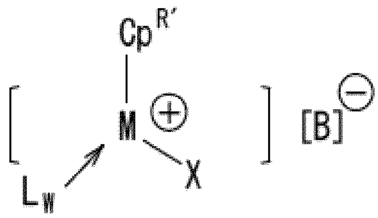

· · · (I)

(In formula (I), M represents a lanthanoid element, scandium or yttrium; $Cp^{R'}$ represents substituted cyclopentadienyl, substituted indenyl or substituted fluorenyl; X represents hydrogen atom, halogen atom, alkoxy, thiolate, amide, silyl, or a $C_{1-20}$ monovalent hydrocarbon group; L represents a neutral Lewis base; w represents an integer in the range of 0 to 3; and $[B]^-$ represents a non-coordinating anion),
wherein each of the substituted cyclopentadienyl, the substituted indenyl or the substituted fluorenyl as $Cp^{R'}$ in general formula (I) has at least one substituent group including Si therein.

EP 3 954 718 A1

FIG. 1

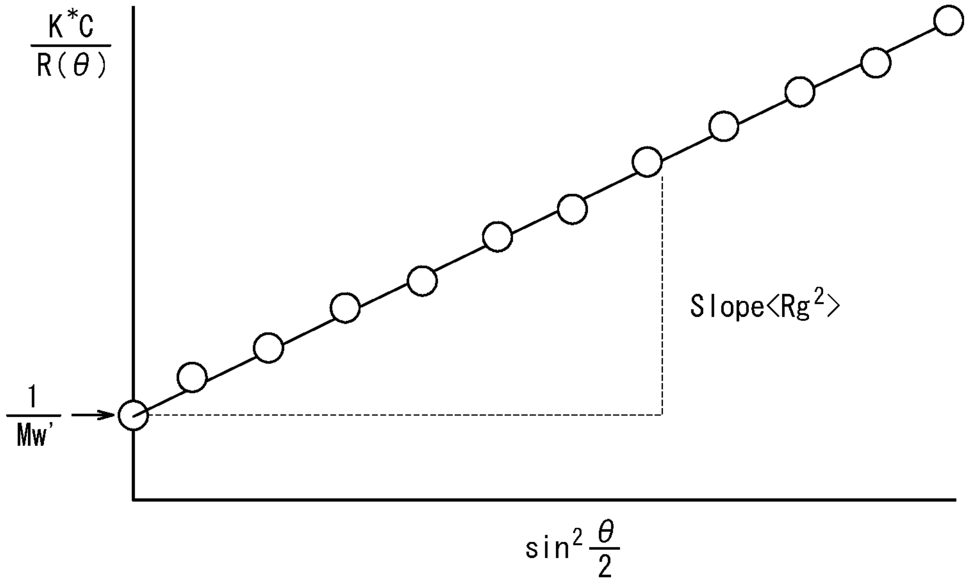

## Description

TECHNICAL FIELD

The present invention relates to a method for manufacturing a polyisoprene.

BACKGROUND ART

Polyisoprene typically represented by natural rubber has been conventionally and widely used in rubber articles such as a tire. Natural rubber as natural polyisoprene has a cis-1, 4 bond content of substantially 100 mol % and thus exhibits superior physical properties including superior durability.
The physical properties of polyisoprene can be controllably changed by increasing/decreasing a vinyl bond content thereof, in this regard. There has been known a synthetic polyisoprene having a high vinyl bond content (e.g., PTL 1 shown below). Further, product name "Isogrip" manufactured by KARBOCHEM Ltd. is known as a commercially available synthetic polyisoprene having a high vinyl bond content.

CITATION LIST

Patent Literature

PTL 1: JP 01-174547 A(1989)

SUMMARY OF THE INVENTION

Technical Problems

However, the conventional polyisoprene having a high vinyl bond content is generally manufactured by anion polymerization in which control of a vinyl bond content is quite difficult. Further, it is also difficult to control a degree of branching of a resulting polyisoprene in anion polymerization.
In view of this, an object of the present disclosure is to provide a method for manufacturing a polyisoprene, which method solves the prior art problem described above and makes it possible to efficiently obtain a polyisoprene having a high vinyl bond content and a low degree of branching.
The primary features of the present disclosure for achieving the objects described above are as follows.
A method for manufacturing a polyisoprene of the present disclosure includes a process of polymerizing isoprene under the presence of a polymerization catalyst composition containing a half metallocene cation complex represented by following general formula (I)

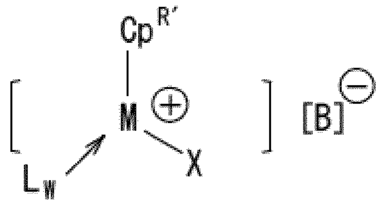 ・・・(I)

(In formula (I), M represents a lanthanoid element, scandium or yttrium; $Cp^{R'}$ represents substituted cyclopentadienyl, substituted indenyl or substituted fluorenyl; X represents hydrogen atom, halogen atom, alkoxy, thiolate, amide, silyl, or a $C_{1-20}$ monovalent hydrocarbon group; L represents a neutral Lewis base; w represents an integer in the range of 0 to 3; and $[B]^-$ represents a non-coordinating anion),
wherein each of the substituted cyclopentadienyl, the substituted indenyl or the substituted fluorenyl as $Cp^{R'}$ in general formula (I) has at least one substituent group including Si therein.
According to the method for manufacturing a polyisoprene of the present disclosure, it is possible to efficiently obtain a polyisoprene having a high vinyl bond content and a low degree of branching.
In a preferable example of the method for manufacturing a polyisoprene of the present disclosure, $Cp^{R'}$ in general formula (I) is substituted indenyl and the substituted indenyl has two or more substituent groups. It is possible to obtain a polyisoprene having a higher vinyl bond content and a lower degree of branching than otherwise in this case.
In another preferable example of the method for manufacturing a polyisoprene of the present disclosure, $Cp^{R'}$ in general formula (I) is substituted indenyl and at least one substituent group of the substituted indenyl exists on the

five-membered ring of the substituted indenyl. It is possible to obtain a polyisoprene having a higher vinyl bond content and a lower degree of branching than otherwise in this case, as well.

In yet another preferable example of the method for manufacturing a polyisoprene of the present disclosure, the polymerization catalyst composition contains no halogen compound. It is possible to obtain a polyisoprene having a higher vinyl bond content than otherwise in this case.

According to the present disclosure, it is possible to provide a method for manufacturing a polyisoprene, which method makes it possible to efficiently obtain a polyisoprene having a high vinyl bond content and a low degree of branching.

## BRIEF DESCRIPTION OF THE DRAWING

In the accompanying drawing, wherein:
FIG. 1 is an explanatory view of a Debye plot obtained by GPC-MALS.

## DETAILED DESCRIPTION

Hereinafter, a method for manufacturing a polyisoprene of the present disclosure will be demonstratively described in detail based on embodiments thereof.

### < Method for manufacturing polyisoprene >

A method for manufacturing a polyisoprene of the present disclosure includes a process of polymerizing isoprene under the presence of a polymerization catalyst composition containing a half metallocene cation complex represented by general formula (I) described above, wherein each of the substituted cyclopentadienyl, the substituted indenyl or the substituted fluorenyl as $Cp^{R'}$ in general formula (I) has at least one substituent group including Si therein.

In the half metallocene cation complex represented by general formula (I), wherein $Cp^{R'}$ in the formula is substituted cyclopentadienyl, substituted indenyl or substituted fluorenyl and each of the substituted cyclopentadienyl, substituted indenyl and substituted fluorenyl has at least one substituent group including Si therein, isoprene molecules to be polymerized approach a core metal M as the catalyst center of the half metallocene cation complex from the side of X in the formula due to steric hindrance caused by the bulky $Cp^{R'}$, whereby polymerization of the isoprene molecules at the C3 and C4 carbon positions thereof is facilitated. Accordingly, a vinyl bond content (a 3,4-vinyl bond content, in particular) increases in a case where $Cp^{R'}$ has at least one substituent group including Si therein. Further, the polymerization proceeds stereoregularly due to the half metallocene cation complex in this case, whereby production of linear polyisoprene having a small number of branches is facilitated. Therefore, according to the method for manufacturing a polyisoprene of the present disclosure, it is possible to efficiently obtain a polyisoprene having a high vinyl bond content and a low degree of branching.

In the half metallocene cation complex represented by general formula (I), $Cp^{R'}$ in the formula is substituted cyclopentadienyl, substituted indenyl or substituted fluorenyl. $Cp^{R'}$ is preferably substituted indenyl among these examples.

$Cp^{R'}$ having a cyclopentadienyl ring as the base skeleton (i.e., substituted cyclopentadienyl) may be represented as $C_5H_{5-y}R_y$ in general formula (I). In this regard, "y" is an integer in the range of 1 to 5, representing the number of substituent group R on the cyclopentadienyl ring. "y" is preferably $\geq 2$, i.e., it is preferable that the substituted cyclopentadienyl has two or more substituent groups R, R. In a case where the substituted cyclopentadienyl has two or more substituent groups R, R, then $Cp^{R'}$ becomes bulkier and causes more significant steric hindrance when isoprene approaches the core metal M than otherwise, thereby further facilitating an increase in vinyl bond content and a decrease in degree of branching in the resulting polyisoprene. The substituent group Rs preferably each independently represent hydrocarbyl or metalloid group, wherein at least one of the substituent groups Rs has Si therein. The substituent group R having Si therein can contribute to making $Cp^{R'}$ bulky with maintaining stability of the complex. The number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, tert-butyl, phenyl, benzyl groups and the like. Examples of metalloid of the metalloid group include, in addition to silyl Si, germyl Ge and stannyl Sn. The metalloid group preferably includes a hydrocarbyl group which is defined in the same manner as the aforementioned hydrocarbyl group. Specific examples of the metalloid group include a substituent group having Si therein such as trimethylsilyl, tert-butyldimethylsilyl, and the like. Among these examples, at least one substituent group R is preferably a bulky substituent group such as tert-butyldimethylsilyl, or the like. In a case where the substituent group R is a bulky substituent group, $Cp^{R'}$ becomes bulkier and causes more significant steric hindrance than otherwise when isoprene to be polymerized approaches the core metal M, thereby further facilitating an increase in vinyl bond content and a decrease in degree of branching in the resulting polyisoprene.

$Cp^{R'}$ having an indenyl ring as the base skeleton (i.e., substituted indenyl) may be represented as $C_9H_{7-y} R_y$ or $C_9H_{11-y} R_y$ in general formula (I). In this regard, "y" is an integer in the range of 1 to 7 or 1 to 11, representing the number of substituent group R on the indenyl ring. "y" is preferably ≥ 2, i.e., it is preferable that the substituted indenyl has two or more substituent groups. In a case where the substituted indenyl has two or more substituent groups R, R, then the $Cp^{R'}$ becomes bulkier and causes more significant steric hindrance than otherwise when isoprene approaches the core metal M, thereby further facilitating an increase in vinyl bond content and a decrease in degree of branching in the resulting polyisoprene.

Further, it is preferable that at least one of the substituent groups R, R exists on the five-membered ring of the substituted indenyl. The substituted indenyl coordinates with the core metal M on the five-membered ring side thereof. Accordingly, in a case where the substituent group R exists on the five-membered ring of the substituted indenyl, $Cp^{R'}$ (substituent indenyl) causes more steric hindrance when isoprene approaches the core metal M than otherwise, thereby further facilitating an increase in vinyl bond content and a decrease in degree of branching in the resulting polyisoprene.

The substituent group Rs preferably each independently represent hydrocarbyl or metalloid group, wherein at least one of the substituent groups Rs has Si therein. The substituent group R having Si therein can contribute to making $Cp^{R'}$ bulky with maintaining stability of the complex. The number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, tert-butyl, phenyl, benzyl groups and the like. Examples of metalloid of the metalloid group include, in addition to silyl Si, germyl Ge and stannyl Sn. The metalloid group preferably includes a hydrocarbyl group which is defined in the same manner as the aforementioned hydrocarbyl group. Specific examples of the metalloid group include a substituent group having Si therein such as trimethylsilyl, tert-butyldimethylsilyl, and the like. Among these examples, at least one substituent group R is preferably a bulky substituent group such as tert-butyldimethylsilyl, or the like. In a case where the substituent group R is a bulky substituent group, $Cp^{R'}$ becomes bulkier and causes more significant steric hindrance than otherwise when isoprene to be polymerized approaches the core metal M, thereby further facilitating an increase in vinyl bond content and a decrease in degree of branching in the resulting polyisoprene.

Specific examples of the substituted indenyl include 1,3-bis(tert-butyldimethylsilyl)indenyl, 1-tert-butyldimethylsilyl-3-trimethylsilylindenyl, 1,3-bis(trimethylsilyl)indenyl, 1-tert-butyldimethylsilyl-3-benzylindenyl, 1-tert-butyldimethylsilyl-3-phenylindenyl, 2-tert-butyldimethylsilylindenyl, 2-trimethylsilyl indenyl, and the like.

$Cp^{R'}$ having a fluorenyl ring as the base skeleton (substituted fluorenyl) in general formula (I) can be represented as $C_{13}H_{9-y}R_y$ or $C_{13}H_{17-y}R_y$.

In this regard, "y" is an integer in the range of 1 to 9 or 1 to 17, representing the number of substituent group R on the fluorenyl ring. "y" is preferably ≥ 2, i.e., it is preferable that the substituted fluorenyl has two or more substituent groups R, R. In a case where the substituted fluorenyl has two or more substituent groups R, R, then $Cp^{R'}$ becomes bulkier and causes more significant steric hindrance than otherwise when isoprene approaches the core metal M, thereby further facilitating an increase in vinyl bond content and a decrease in degree of branching in the resulting polyisoprene.

The substituent ring Rs preferably each independently represent hydrocarbyl or metalloid group, wherein at least one of the substituent groups Rs has Si therein. The substituent group R having Si therein can contribute to making $Cp^{R'}$ bulky with maintaining stability of the complex. The number of carbon atoms of the hydrocarbyl group is preferably in the range of 1 to 20, more preferably in the range of 1 to 10, and further more preferably in the range of 1 to 8. Specifically, preferable examples of the hydrocarbyl group include methyl, ethyl, tert-butyl, phenyl, benzyl groups and the like. Examples of metalloid of the metalloid group include, in addition to silyl Si, germyl Ge and stannyl Sn. The metalloid group preferably includes a hydrocarbyl group which is defined in the same manner as the aforementioned hydrocarbyl group. Specific examples of the metalloid group include a substituent group having Si therein such as trimethylsilyl, tert-butyldimethylsilyl, and the like. Among these examples, at least one substituent group R is preferably a bulky substituent group such as tert-butyldimethylsilyl, or the like. In a case where the substituent group R is a bulky substituent group, $Cp^{R'}$ becomes bulkier and causes more significant steric hindrance than otherwise when isoprene to be polymerized approaches the core metal M, thereby further facilitating an increase in vinyl bond content and a decrease in degree of branching in the resulting polyisoprene.

The core metal M in general formula (I) is a lanthanoid element, scandium or yttrium. The lanthanoid elements include fifteen elements having atomic numbers 57-71 and any of these elements is acceptable. Preferable examples of the core metal M include samarium Sm, neodymium Nd, praseodymium Pr, gadolinium Gd, cerium Ce, holmium Ho, scandium Sc, and yttrium Y. In this respect, a core metal M having a relatively small atomic radius is preferable. Use of a core metal M having a relatively small atomic radius facilitates an increase in vinyl bond content of the resulting polyisoprene. Among the examples of the core metal M described above, neodymium Nd, gadolinium Gd, and holmium Ho are preferable in terms of reactivity and gadolinium Gd and holmium Ho (holmium Ho, in particular) are preferable in terms of atomic radius.

In general formula (I), X is selected from the group consisting of hydrogen atom, halogen atom, alkoxy group, thiolate group, amide group, silyl group, and a $C_{1-20}$ monovalent hydrocarbon group. Acceptable examples of the halogen

atom represented by X in general formula (I) include fluorine, chlorine, bromine and iodine atoms. Chlorine or bromine atom is preferable, although any of the aforementioned four halogen atoms may be employed.

In general formula (I), examples of the alkoxy group represented by X include: aliphatic alkoxy group such as methoxy, ethoxy, propoxy, n-butoxy, isobutoxy, sec-butoxy, tert-butoxy, and the like; and aryloxy group such as phenoxy, 2,6-di-tert-butylphenoxy, 2,6-diisopropylphenoxy, 2,6-dineopentylphenoxy, 2-tert-butyl-6-isopropylphenoxy, 2-tert-butyl-6-neopentylphenoxy, 2-isopropyl-6-neopentylphenoxy, and the like. 2,6-di-tert-butylphenoxy is preferable as the alkoxy group among these examples.

Examples of the thiolate group represented by X in general formula (I) include: aliphatic thiolate group such as thiomethoxy, thioethoxy, thiopropoxy, n-thiobutoxy, thoisobutoxy, sec-thiobutoxy, tert-thiobutoxy, and the like; and arylthiolate group such as thiophenoxy, 2,6-di-tert-butylthiophenoxy, 2,6-diisopropylthiophenoxy, 2,6-dineopentylthiophenoxy, 2-tert-butyl-6-isopropylthiophenoxy, 2-tert-butyl-6-thioneopentylphenoxy, 2-isopropyl-6-thioneopentylphenoxy, 2,4,6-triisopropylthiophenoxy, and the like. 2,4,6-triisopropylthiophenoxy is preferable as the thiolate group among these examples.

Examples of the amide group represented by X in general formula (I) include: aliphatic amide group such as dimethylamide, diethylamide, diisopropylamide, and the like; arylamide group such as phenylamide, 2,6-di-tert-butylphenylamide, 2,6-diisopropylphenylamide, 2,6-dineopentylphenylamide, 2-tert-butyl-6-isopropylphenylamide, 2-tert-butyl-6-neopentylphenylamide, 2-isopropyl-6-neopentylphenylamide, 2,4,6-tri-tert-butylphenylamide, and the like; bis(trialkylsilyl)amide such as bis(trimethylsilyl)amide and the like; and bis(dialkylsilyl)amide such as bis(dimethylsilyl)amide and the like. Bis(trimethylsilyl)amide group and bis(dimethylsilyl)amide group are preferable as the amide group among these examples.

Examples of the silyl group represented by X in general formula (I) include trimethylsilyl, tris(trimethylsilyl)silyl, bis(trimethylsilyl)methylsilyl, trimethylsilyl(dimethyl)silyl, triisopropylsilyl(bistrimethylsilyl)silyl, and the like. Tris(trimethylsilyl)silyl is preferable as the silyl group among these examples.

Specific examples of the $C_{1-20}$ monovalent hydrocarbon group represented by X in general formula (I) include: normal/branched aliphatic hydrocarbon group such as methyl, ethyl, n-propyl, isopropyl, n-butyl, isobutyl, sec-butyl, tert-butyl, neopentyl, hexyl, octyl; aromatic hydrocarbon group such as phenyl, tolyl, naphthyl; aralkyl group such as benzyl; a hydrocarbon group containing silicon atom such as trimethylsilylmethyl, bis(trimethylsilyl)methyl; and the like. Methyl, ethyl, isobutyl, trimethylsilylmethyl, and the like are preferable as the $C_{1-20}$ monovalent hydrocarbon group among these examples.

Bis(trimethylsilyl)amide or bis(dimethylsilyl)amide or a $C_{1-20}$ monovalent hydrocarbon group is preferable as X in general formula (I).

Examples of the non-coordinating anion represented by $[B]^-$ in general formula (I) include quadrivalent boron anion. Specific examples of the quadrivalent boron anion include tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, triphenyl(pentafluorophenyl)borate, [tris(pentafluorophenyl)phenyl]borate, tridecahydride-7,8-dicarbaundecaborate, and the like. Tetrakis(pentafluorophenyl)borate is preferable as the quadrivalent boron anion among these examples.

The half metallocene cation complex represented by general formula (I) further includes 0 to 3, preferably 0 to 1, neutral Lewis base L. Examples of the neutral Lewis base L include tetrahydrofuran, diethyl ether, dimethylaniline, trimethylphosphine, lithium chloride, neutral olefin, neutral diolefin, and the like. The neutral Lewis bases L may be of either the same type or different types when the complex includes a plurality of neutral Lewis bases L.

Further, the half metallocene cation complex represented by general formula (I) may exist as any of monomer, dimer or another type of multimer.

The half metallocene cation complex represented by general formula (I) can be obtained, for example, by a reaction shown below.

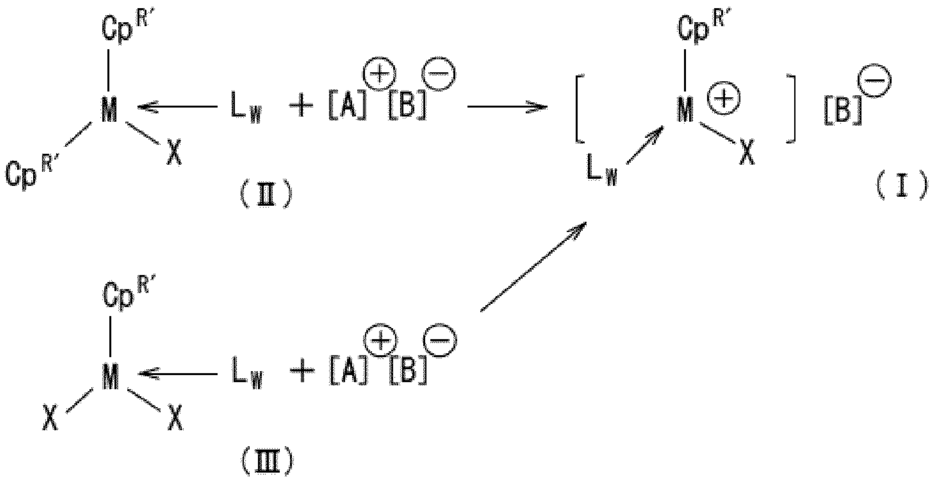

In the compound represented by general formula (II) or general formula (III), M represents a lanthanoid element, scandium or yttrium; $Cp^{R'}$ or $Cp^{R'}$s each independently represent substituted cyclopentadienyl, substituted indenyl or substituted fluorenyl; and X or Xs each independently represent hydrogen atom, halogen atom, alkoxy, thiolate, amide, silyl, or a $C_{1-20}$ monovalent hydrocarbon group. L represents a neutral Lewis base and w represents an integer in the range of 0 to 3. $[A]^+$ represents a cation and $[B]^-$ represents a non-coordinating anion in an ionic compound represented by $[A]^+$ $[B]^-$.

Examples of the cation represented by $[A]^+$ include carbonium cation, oxonium cation, amine cation, phosphonium cation, cycloheptatrienyl cation, ferrocenium cation having transition metal, and the like. Examples of the carbonium cation include trisubstituted carbonium cation such as triphenylcarbo(e)nium cation (which may occasionally be referred to as "trityl cation"), tri(substituted phenyl)carbonium cation, and the like. Specific examples of the tri(substituted phenyl)carbonium cation include tri(methylphenyl)carbonium cation. Examples of the amine cation include: trialkylammonium cation such as trimethylammonium cation, triethylammonium cation, tripropylammonium cation, tributylammonium cation; N,N-dialkylanilinium cation such as N,N-dimethylanilinium cation, N,N-diethylanilinium cation, N,N-2,4,6-pentamethylanilinium cation; dialkylammonium cation such as diisopropylammonium cation, dicyclohexylammonium cation; and the like. Examples of the phosphonium cation include triarylphosphonium cation such as triphenylphosphonium cation, tri(methylphenyl)phosphonium cation, tri(dimethylphenyl)phosphonium cation, and the like. N,N-dialkylanilinium cation or carbonium cation is preferable and N,N-dialkylanilinium cation is particularly preferable as $[A]^+$ among these examples.

The ionic compound represented by general formula $[A]^+$ $[B]^-$ for use in the aforementioned reaction is, for example, a compound obtained by combining a non-coordinating anion and a cation respectively selected from the aforementioned examples and preferably N,N-dimethylanilinium tetrakis(pentafluorophenyl)borate, triphenylcarbonium tetrakis(pentafluorophenyl)borate (which may occasionally be referred to as "trityl tetrakis(pentafluorophenyl)borate"), and the like. The ionic compound represented by general formula $[A]^+$ $[B]^-$ is added to the compounds represented by general formula (II) or general formula (III) by an amount preferably 0.1 to 10 times, more preferably approximately 1 times, as much as the amount of the compounds represented by general formula (II) or general formula (III) when compared in mol. In the case where the half metallocene cation complex represented by general formula (I) is used for a polymerization reaction, the half metallocene cation complex represented by general formula (I) may be directly provided into a polymerization reaction system or, alternatively, the half metallocene cation complex represented by general formula (I) may be formed in a polymerization reaction system by providing a compound represented by general formula (II) or general formula (III) and the ionic compound represented by general formula $[A]^+$ $[B]^-$ for use in the aforementioned reaction, respectively, in the polymerization reaction system.

The structure of the half metallocene cation complex represented by general formula (I) can be determined through x-ray structural analysis.

The concentration of the half metallocene cation complex contained in the polymerization catalyst composition is preferably in the range of 0.0001 mol/L to 0.1 mol/L in the polymerization reaction system.

The polymerization catalyst composition may further include other components included in a conventional metallocene complex-containing polymerization catalyst composition, e.g., a prompter. In the present disclosure, a "metallocene complex" represents a complex compound in which at least one cyclopentadienyl or derivative thereof is bonded to a core metal. In the present disclosure, a metallocene complex in which only a single cyclopentadienyl or derivative thereof (indenyl, fluorenyl, or the like) is bonded to a core metal is referred to as a "half metallocene complex" in particular.

The prompter applicable to the polymerization catalyst composition can be selected according to necessity

from components used as prompters for a conventional polymerization catalyst composition containing a metallocene complex. Preferable examples of the prompter include aluminoxane, an organic aluminum compound, the ionic compounds described above, and the like. Either a single type or combination of two or more types of these examples may be used as the prompter.

The aforementioned aluminoxane is preferably alkylaluminoxane and examples thereof include methylaluminoxane (MAO), modified methylaluminoxane, and the like. "MMAO-3A" (manufactured by Tosoh Finechem Corporation) or the like is preferable as the modified methylaluminoxane. Provided that "Al/M" represents an element ratio of the aluminum element Al of the aluminoxane with respect to the core metal M of the half metallocene cation complex, the content of the aluminoxane in the polymerization catalyst composition is preferably set such that the element ratio Al/M is in the range of 10 to 1000 approximately, desirably around 100.

On the other hand, the aforementioned organic aluminum compound is preferably an organic aluminum compound represented by general formula $AlR^1R^2R^3$ (in the formula, $R^1$ and $R^2$ each independently represent a $C_{1-10}$ hydrocarbon group or a hydrogen atom and $R^3$ represents a $C_{1-10}$ hydrocarbon group). Examples of the organic aluminum compound include trialkylaluminum, dialkylaluminum hydride, and the like. Trialkylaluminum is preferable as the organic aluminum compound among these examples. Examples of trialkylaluminum include triethylaluminum, triisobutylaluminum, and the like. Examples of dialkylaluminum hydride include diisobutylaluminum hydride, and the like. A content of the organic aluminum compound in the polymerization catalyst composition is preferably 1 to 50 times, more preferably around 10 times, as much as the content of the half metallocene cation complex in the composition when compared in mol.

The vinyl bond content and/or the molecular weight of a resulting polyisoprene can be increased by using the half metallocene cation complex represented by general formula (I) with an appropriate prompter in combination in the polymerization catalyst composition.

It is preferable that the polymerization catalyst composition contains no halogen compound in the method for manufacturing a polyisoprene of the present disclosure. Conventionally, a halogen compound such as dialkylaluminum chloride, alkylaluminum dichloride or the like is often used when an organic aluminum compound is employed as a prompter in a polymerization reaction using a half metallocene cation complex or a metallocene complex. However, in the present disclosure, it is possible to obtain a polyisoprene having a higher vinyl bond content than otherwise by not using a halogen compound in combination with the half metallocene cation complex represented by general formula (I).

The method for manufacturing a polyisoprene of the present disclosure includes a process of polymerizing isoprene under the presence of the polymerization catalyst composition described above (which polymerizing process will simply be referred to as the "polymerization process" hereinafter). The method for manufacturing a polyisoprene of the present disclosure may further include other processes such as coupling process and rinsing process, according to necessity.

Any polymerization method such as solution polymerization, suspension polymerization, liquid-phase bulk polymerization, emulsion polymerization, vapor-phase polymerization, or solid-phase polymerization can be used as the polymerization method in the polymerization process. In a case where a solvent is used in the polymerization reaction, any solvent is acceptable as long as the solvent is inactive in the polymerization reaction. Examples of the solvent include toluene, hexane (e.g. cyclohexane, n-hexane), and the like. Hexane is preferable among the examples. Environmental burden can be reduced by using hexane as a solvent in the polymerization.

It is possible, under the presence of the polymerization catalyst composition, to control bond contents (cis-1,4 bond content, trans-1,4 bond content, 3,4 vinyl bond content, and 1,2 vinyl bond content) in the resulting polyisoprene by controllably changing the reaction conditions.

The polymerization reaction is preferably carried out in an atmosphere of inert gas, desirably in an atmosphere of nitrogen gas or argon gas in the polymerization process. The polymerization temperature in the polymerization reaction, although it is not particularly restricted, is preferably in the range of -100 °C to 200 °C and may be around the room temperature, for example. Pressure during the polymerization reaction is preferably in the range of 0.1 MPa to 10.0 MPa. Reaction time of the polymerization reaction is preferably in the range of 1 second to 10 days, for example, although it is not particularly restricted. The reaction time may be appropriately set depending on conditions such as a micro structure desired for the resulting polyisoprene, type of the catalyst, the polymerization temperature, and the like.

The polymerization reaction can be stopped by using a polymerization terminator such as methanol, ethanol, isopropanol in the polymerization process.

The coupling process is a process of carrying out a reaction (a coupling reaction) for modifying at least a portion, e.g., a terminal end, of a polyisoprene obtained by the polymerization process described above.

In the coupling process, the coupling reaction is preferably carried out when a conversion ratio in the polymerization reaction has reached 100 %.

Type of a coupling agent for use in the coupling reaction is not particularly restricted and can be appropriately selected according to the purpose. Examples of the coupling agent include: (i) a tin-containing compound such as bis(maleic acid-1-octadecyl)dioctyl tin (IV); (ii) an isocyanate compound such as 4,4'-diphenylmethane diisocyanate; (iii) an alkoxysilane compound such as glycidyl propyltrimethoxysilane; and the like. Either a single type or combination of two or

more types of these examples may be used as the coupling agent. Bis(maleic acid-1-octadecyl)dioctyl tin (IV) is preferable as the coupling agent among these examples in terms of high reaction efficiency and relatively little gel generation.
It is possible to increase the number-average molecular weight (Mn), the weight-average molecular weight (Mw), and the weight-average absolute molecular weight (Mw') of the resulting polyisoprene by carrying out a coupling reaction.
The rinsing process is a process of rinsing a polyisoprene obtained by the aforementioned polymerization process. Type of a medium for use in the rinsing process is not particularly restricted and can be appropriately selected according to the purpose. Examples of the medium include methanol, ethanol, isopropanol, and the like. An acid (such as hydrochloric acid, sulfuric acid, nitric acid) may be added to such a medium or solvent as described above in use. An amount to be added, of the acid, is preferably 15 mol % or less with respect to the solvent. Addition of the acid by an amount exceeding 15 mol % with respect to the solvent may cause the acid to remain in the polyisoprene, possibly adversely affecting mixture and kneading processes and a vulcanization reaction.
An amount of catalyst residue in the polyisoprene can be decreased to an appropriate level by the rinsing process.

< Polyisoprene >

The polyisoprene obtained by the method for manufacturing a polyisoprene of the present disclosure exhibits a high vinyl bond content and a low degree of branching. In the polyisoprene obtained by the polyisoprene production method of the present disclosure, a vinyl bond content of the polyisoprene is preferably ≥ 30 mol % and more preferably ≥ 50 mol %. It is possible to improve grip performance on a wet road surface of a tire by using for the tire a polyisoprene of which vinyl bond content is ≥ 30 mol %. The grip performance on a wet road surface, of a tire, can be further improved when a vinyl bond content of the polyisoprene is ≥ 50 mol %. A vinyl bond content of the polyisoprene obtained by the polyisoprene production method of the present disclosure may be 100 mol % but preferably ≤ 85 mol % because a polyisoprene of which vinyl bond content is ≤ 85 mol % can be easily manufactured by the polyisoprene production method of the present disclosure.
The vinyl bond content of the polyisoprene described above represents the sum of a 1,2-vinyl bond content (i.e., a content of 1,2-bonding unit of isoprene) and a 3,4-vinyl bond content (i.e., a content of 3,4-bonding unit of isoprene). In this regard, a 1,2-vinyl bond content of the polyisoprene obtained by the polyisoprene production method of the present disclosure is preferably ≤ 1 mol %, more preferably ≤ 0.5 mol %, and may be 0 mol % (that is, ≤ the lower limit detectable by NMR). A polyisoprene having a high content of vinyl bond, manufactured by the conventional method, exhibits a high 1,2-vinyl bond content exceeding 1 mol %. In contrast, a polyisoprene of which 1,2-vinyl bond content is ≤ 1 mol % can be easily obtained by the polyisoprene production method of the present disclosure.
In the polyisoprene obtained by the polyisoprene production method of the present disclosure, it is preferable that a ratio of the weight-average absolute molecular weight determined by GPC-MALS with respect to the weight-average molecular weight in terms of polystyrene determined by GPC [(weight-average absolute molecular weight)/(weight-average molecular weight in terms of polystyrene)] is 0850 or less.
The GPC-MALS is an analytical method as a combination of gel permeation chromatography (GPC) and multi-angle light scattering (MALS), by which the absolute molecular weight of a polyisoprene can be measured. In the present disclosure, the weight average absolute molecular weight (Mw') is the weight average value of an absolute molecular weight, calculated by subjecting each measured absolute molecular weight to weighting by the weight average. The weight average absolute molecular weight (Mw') is the average molecular weight which more clearly reflects than otherwise an effect of a component having a large molecular weight and thus significantly affecting the physical properties. The weight average absolute molecular weight (Mw') and a radius of gyration (Rg) relevant to the polyisoprene can be determined by: analyzing by using a MALS detector the respective components, separated by GPC, of the polyisoprene; and generating a Debye plot based thereon (see FIG. 1).
In FIG. 1, Mw' represents the weight-average absolute molecular weight, K* represents an optical parameter, C represents the concentration, R(θ) represents a Rayleigh ratio of excess scattering of light, Rg represents a radius of gyration, and < $Rg^2$ > represents a root-mean-square of the radius of gyration. A differential refractive index (RI) detector is generally used for measuring the concentration of a soluble component in this regard. It is then possible to calculate i) the relevant weight-average absolute molecular weight (Mw') from an intercept of the Debye plot and ii) the relevant radius of gyration (Rg) from the slope of the line thus plotted.
On the other hand, the weight-average molecular weight in terms of polystyrene (Mw) is a molecular weight calculated by subjecting the molecular weight in terms of polystyrene as a reference material (the relative molecular weight) to weighting by the weight average.
GPC carries out separation of respective components by a column according to the size of a molecule, such that a polyisoprene component having the larger molecular size is eluted the faster. It should be noted in this regard that a polyisoprene molecule having a number of branches has a more spherical shape than a polyisoprene molecule not having so many branches, whereby in GPC the former has a relatively small molecular size and thus a relatively small weight-average molecular weight in terms of polystyrene, as compared with the latter, although the former and

the latter actually share the same molecular weight. In contrast, GPC-MALS does not measure a molecular weight in terms of polystyrene but an absolute molecular weight, thereby being less likely to be affected by a degree of branching. Accordingly, the higher degree of branching results in the higher ratio of the weight-average absolute molecular weight (Mw') determined by GPC-MALS with respect to the weight-average molecular weight (Mw) in terms of polystyrene determined by GPC [(weight-average absolute molecular weight (Mw'))/(weight-average molecular weight in terms of polystyrene (Mw))], whereas the lower degree of branching results in the lower ratio of Mw'/Mw. A polyisoprene having a high content of vinyl bond, manufactured by the conventional method, exhibits a high value of (weight-average absolute molecular weight (Mw'))/(weight-average molecular weight in terms of polystyrene (Mw)) as an index of degree of branching, which value exceeds 0.850. In contrast, according to the polyisoprene production method of the present disclosure, a polyisoprene of which (weight-average absolute molecular weight (Mw'))/(weight-average molecular weight in terms of polystyrene (Mw)) is 0.850 or less can be easily obtained.

The ratio of (weight-average absolute molecular weight (Mw'))/(weight-average molecular weight in terms of polystyrene (Mw)) described above is more preferably ≤ 0.800 and preferably ≥ 0.550. A degree of branching of the polyisoprene further decreases when (weight-average absolute molecular weight (Mw'))/(weight-average molecular weight in terms of polystyrene (Mw)) is ≤ 0.800. Moreover, a polyisoprene of which (weight-average absolute molecular weight (Mw'))/(weight-average molecular weight in terms of polystyrene (Mw)) is 0.550 or higher is easily obtained by the polyisoprene production method of the present disclosure.

In the polyisoprene obtained by the polyisoprene production method of the present disclosure, a branching index determined by GPC-MALS and treated by the weight average, i.e., a $g_w$ value, is 0.42 or higher.

The GPC-MALS is an analytical method as a combination of GPC and MALS, by which not only the aforementioned absolute molecular weight of a polyisoprene but also the root-mean-square of a radius of gyration of the polyisoprene at the absolute molecular weight can be measured, wherein the root-mean-square of a radius of gyration of the polyisoprene corresponds to the molecular size thereof at the absolute molecular weight.

Provided that a branching index (i.e., a "g value") represents a value obtained by dividing the root-mean-square of a radius of gyration of a measurement sample ($< Rg^2 >_{Sample}$) by the "theoretical" or "reference" root-mean-square of a radius of gyration of a linear polyisoprene having the same absolute molecular weight as the measurement sample ($< Rg^2 >_{Linear}$), the branching index (the g value) is expressed as follows.

$$\text{Branching index (g value)} = < Rg^2 >_{Sample} / < Rg^2 >_{Linear}$$

In the present disclosure, the closer the branching index (the g value) to 1, the lower is a degree of branching of the measurement sample.

The branching index (the $g_w$ value) calculated by subjecting the branching index (the g value) at each absolute molecular weight to weighting by the weight average, i.e., the branching index (the $g_w$ value) treated by the weight average, is a branching index which more clearly reflects than otherwise an effect of a component having a large molecular weight and thus significantly affecting the physical properties. Weighting by the weight average can be carried out by $\Sigma g_i M_i / \Sigma M_i$, provided that gi represents a branching index at an absolute molecular weight Mi.

In the present disclosure, a radius of gyration of a linear polyisoprene is larger than a radius of gyration of an abundantly branched polyisoprene having the same molecular weight, whereby the root-mean-square of a radius of gyration of the linear polyisoprene is larger than the root-mean-square of a radius of gyration of the abundantly branched polyisoprene having the same molecular weight. Accordingly, the lower the degree of branching of a measurement sample is, the larger the branching index (the $g_w$ value) thereof becomes to approximate 1. Therefore, a branching index (a $g_w$ value) of 0.42 or higher of a polyisoprene reasonably indicates that the polyisoprene has a significantly low degree of branching.

The aforementioned branching index (the $g_w$ value) treated by the weight average is more preferably ≥ 0.45 and preferably ≤ 0.80. A degree of branching of the polyisoprene further decreases when the branching index (the $g_w$ value) treated by the weight average is ≥ 0.45. Moreover, a polyisoprene of which branching index (the $g_w$ value) treated by the weight average is ≤ 0.80 is easily obtained by the polyisoprene production method of the present disclosure.

In the polyisoprene obtained by the polyisoprene production method of the present disclosure, the weight-average molecular weight in terms of polystyrene (Mw) is preferably in the range of 100,000 to 4,000,000 and more preferably in the range of 230,000 to 3,000,000. In a case where the polyisoprene is used for a rubber composition, mechanical strength of the rubber composition successfully improves when Mw is ≥ 100,000 and workability of the rubber composition successfully improves when Mw is ≤ 4,000,000.

In the polyisoprene obtained by the polyisoprene production method of the present disclosure, the number-average molecular weight in terms of polystyrene (Mn) is preferably in the range of 50,000 to 2,000,000 and more preferably in the range of 125,000 to 1,500,000. In a case where the polyisoprene is used for a rubber composition, mechanical strength of the rubber composition successfully improves when Mn is ≥ 50,000 and workability of the rubber composition successfully improves when Mn is ≤ 2,000,000.

In the polyisoprene obtained by the polyisoprene production method of the present disclosure, the molecular weight distribution (the weight-average molecular weight in terms of polystyrene (Mw)/the number-average molecular weight in terms of polystyrene (Mn)) is preferably in the range of 1 to 4. The physical properties of the polyisoprene exhibit satisfactory uniformity when the molecular weight distribution of the polyisoprene is ≤ 4.

In the polyisoprene obtained by the polyisoprene production method of the present disclosure, the weight-average absolute molecular weight (Mw') is preferably in the range of 80,000 to 3,000,000 and more preferably in the range of 155,000 to 2,500,000. In a case where the polyisoprene is used for a rubber composition, mechanical strength of the rubber composition successfully improves when Mw' is ≥ 80,000 and workability of the rubber composition successfully improves when Mw' is ≤ 3,000,000.

In the polyisoprene obtained by the polyisoprene production method of the present disclosure, the glass transition temperature (Tg) measured by a differential scanning calorimeter (DSC) is preferably in the range of -60 °C to 20 °C and more preferably in the range of -35 °C to 20 °C. A vinyl bond content of the polyisoprene is likely to be satisfactorily high when the glass transition temperature thereof is -60 °C or higher. Further, a polyisoprene of which glass transition temperature is 20 °C or lower can be easily obtained by the polyisoprene production method of the present disclosure.
In the present disclosure, the aforementioned glass transition temperature values are those measured by a differential scanning calorimeter according to JIS K 7121-1987.

< Application of polyisoprene >

The polyisoprene obtained by the polyisoprene production method of the present disclosure can be utilized as a rubber component of a rubber composition. A rubber composition containing the polyisoprene of the present disclosure exhibits relatively small hysteresis loss, thereby successfully decreasing rolling resistance and improving the fuel-saving performance of a tire when the rubber composition is used for the tire. Further, the rubber composition, when it is used for a tire, can also improve grip performance on a wet road surface of the tire.
The rubber composition, containing the polyisoprene of the present disclosure as a rubber component, may further contain other rubber components, a filler, a crosslinking agent, and other components according to necessity.

A content of the polyisoprene in the rubber component described above is preferably in the range of 10 to 100 mass %, more preferably in the range of 20 to 100 mass %, and still more preferably in the range of 30 to 100 mass %. The polyisoprene content in the rubber component, of ≥ 10 mass %, ensures full demonstration of an effect caused by the polyisoprene, thereby further decreasing hysteresis loss of the rubber composition and further improving the fuel-saving performance and grip performance on a wet road surface, of a tire, when the rubber composition is used for the tire.

Types of rubber components other than the polyisoprene of the present disclosure are not particularly restricted and can be appropriately selected according to the purpose. Examples of other rubber components include natural rubber (NR), polybutadiene rubber (BR), acrylonitrile-butadiene rubber (NBR), chloroprene rubber, ethylene-propylene rubber (EPM), ethylene-propylene-nonconjugated diene rubber (EPDM), polysulfide rubber, silicone rubber, fluororubber, urethane rubber, and the like. Either a single type or combination of two or more types of these examples may be used as the other rubber components.

The rubber composition can improve reinforcing properties thereof by including a filler therein. Type of the filler is not particularly restricted and examples thereof include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, barium sulfate, and the like. Carbon black is preferably used among these examples. Either a single type or combination of two or more types of these examples may be used as the filler.
A content of the filler, although it is not particularly restricted and appropriately selected according to the purpose, is preferably 10 to 100 parts by mass, more preferably 20 to 80 parts by mass, and most preferably 30 to 60 parts by mass, with respect to 100 parts by mass of the rubber component. The content of the filler, of ≥ 10 parts by mass with respect to 100 parts by mass of the rubber component, ensures an effect of improving the reinforcing property of the rubber composition by the filler. The content of the filler, of ≤ 100 parts by mass with respect to 100 parts by mass of the rubber component, ensures good workability of the rubber composition.

Type of the crosslinking agent is not particularly restricted and can be appropriately selected according to the purpose. Examples of the crosslinking agent include sulfur-based crosslinking agent, organic peroxide-based crosslinking agent, inorganic crosslinking agent, polyamine crosslinking agent, resin crosslinking agent, sulfur compound-based crosslinking agent, oxime-nitrosamine-based crosslinking agent, and the like. Sulfur-based crosslinking agent (vulcanizing agent) is preferably applied to a rubber composition for a tire among these examples.
A content of the crosslinking agent is not particularly restricted and can be appropriately selected according to the purpose but is preferably in the range of 0.1 to 10 parts by mass with respect to 100 parts by mass of the rubber component.

When a vulcanizing agent is employed, a vulcanization accelerator may be used in combination with the vulcanizing agent. Examples of the vulcanization accelerator include guanidine based, aldehyde-amine based, aldehyde-ammonium based, thiazole based, sulfenamide based, thiourea based, thiuram based, dithiocarbamate based, xanthate based compounds, and the like.

Further, other known additives such as a softener, a vulcanization accelerator aid, a coloring agent, a fire

retardant, a lubricant, a foaming agent, a plasticizer, a processing aid, an antioxidant, an antiaging agent, a scorch protection agent, a UV protection agent, an antistatic agent, an anticoloring agent, and the like may optionally be used in the rubber composition according to the necessity.

The rubber composition is applicable to, other than a tire described below, a rubber damper, quake-absorbing rubber, a belt such as a conveyor belt, a rubber crawler, hoses of various types, and the like.

A tire using the rubber composition described above exhibits low rolling resistance and is excellent in the fuel-saving performance and grip performance on a wet road surface thereof. A portion of a tire to which the rubber composition is to be applied is not particularly limited and the tire portion can be appropriately selected according to the purpose. Examples of the tire portion include a tread, a base tread, a sidewall, side reinforcing rubber, a bead filler, and the like. The tire described above can be manufactured by a conventional method. For example, a desired tire (such as a pneumatic tire) can be manufactured by: sequentially laminating members generally for use in tire production such as a carcass layer, a belt layer, a tread layer made of the unvulcanized rubber composition and/or cords on a tire building drum; removing the drum, to obtain a green tire; and subjecting the green tire to heating and vulcanization according to the conventional method.

EXAMPLES

The present disclosure will be described further in detail by Examples hereinafter. The present disclosure is not restricted by any means by these Examples.

(Example 1)

A polymer (polyisoprene) was obtained by: charging 35 g of toluene and 460 g of a toluene solution containing 100 g of isoprene into a thoroughly dry 1 L pressure-resistant glass reactor;

charging, on the other hand, 0.005 mmol of mono(1,3-bis(tert-butyldimethylsilyl)indenyl) gadolinium bis(bis(dimethylsilyl)amide) complex {1,3-[(t-Bu)$Me_2Si]_2C_9H_5Gd[N(SiHMe_2)_2]_2$}, 0.005 mmol of trityl tetrakis(pentafluorophenyl)borate [$Ph_3CB(C_6F_5)_{4]}$, 0.1 mmol of triisobutylaluminum, and 1.9 mmol of diisobutylaluminum hydride into a glass vessel in a glovebox under nitrogen atmosphere and dissolving the substances in 5 mL of toluene, to obtain a catalyst solution;
adding the catalyst solution thus obtained, to the 1L pressure-resistant glass reactor, and allowing a reaction to proceed for 300 minutes at 50 °C;
then stopping the reaction by adding an isopropanol solution (1 mL) of 5 mass % 2,2'-methylene-bis(4-ethyl-6-tert-butylphenol) (NS-5) to the 1L pressure-resistant glass reactor; and
isolating a polymer by using a large amount of methanol and vacuum-drying the resulting polymer at 50 °C, thereby obtaining 96 g of the polymer (polyisoprene) of Example 1.

(Example 2)

A polymer (polyisoprene) was obtained by: charging 31 g of toluene and 461 g of a toluene solution containing 100 g of isoprene into a thoroughly dry 1 L pressure-resistant glass reactor;

charging, on the other hand, 0.010 mmol of mono(1,3-bis(tert-butyldimethylsilyl)indenyl) holmium bis(bis(dimethylsilyl)amide) complex {1,3-[(t-Bu)$Me_2Si]_2C_9H_5Ho[N(SiHMe_2)_2]_2$}, 0.010 mmol of trityl tetrakis(pentafluorophenyl)borate [$Ph_3CB(C_6F_5)_{4]}$, 0.20 mmol of triisobutylaluminum, and 1.8 mmol of diisobutylaluminum hydride into a glass vessel in a glovebox under nitrogen atmosphere and dissolving the substances in 5 mL of toluene, to obtain a catalyst solution;
adding the catalyst solution thus obtained, to the 1L pressure-resistant glass reactor, and allowing a reaction to proceed for 900 minutes at 50 °C;
then stopping the reaction by adding an isopropanol solution (1 mL) of 5 mass % 2,2'-methylene-bis(4-ethyl-6-tert-butylphenol) (NS-5) to the 1L pressure-resistant glass reactor; and
isolating a polymer by using a large amount of methanol and vacuum-drying the resulting polymer at 50 °C, thereby obtaining 90 g of the polymer (polyisoprene) of Example 2.

(Example 3)

A polymer (polyisoprene) was obtained by: charging 36 g of toluene and 576 g of a toluene solution containing 125 g of isoprene into a thoroughly dry 1 L pressure-resistant glass reactor;

charging, on the other hand, 0.015 mmol of mono(1,3-bis(tert-butyldimethylsilyl)indenyl) holmium bis(bis(dimethylsilyl)amide) complex {1,3-[(t-Bu)$Me_2Si]_2C_9H_5Ho[N(SiHMe_2)_2]_2$}, 0.015 mmol of trityl tetrakis(pentafluorophenyl)borate $[Ph_3CB(C_6F_5)_4]$, 0.30 mmol of triisobutylaluminum, and 6.0 mmol of diisobutylaluminum hydride into a glass vessel in a glovebox under nitrogen atmosphere and dissolving the substances in 5 mL of toluene, to obtain a catalyst solution;

adding the catalyst solution thus obtained, to the 1L pressure-resistant glass reactor, and allowing a reaction to proceed for 900 minutes at 50 °C;

then stopping the reaction by adding an isopropanol solution (1 mL) of 5 mass % 2,2'-methylene-bis(4-ethyl-6-tert-butylphenol) (NS-5) to the 1L pressure-resistant glass reactor; and

isolating a polymer by using a large amount of methanol and vacuum-drying the resulting polymer at 50 °C, thereby obtaining 108 g of the polymer (polyisoprene) of Example 3.

(Example 4)

A polymer (polyisoprene) was obtained by: charging 38 g of toluene and 576 g of a toluene solution containing 125 g of isoprene into a thoroughly dry 1 L pressure-resistant glass reactor;

charging, on the other hand, 0.0125 mmol of mono(1,3-bis(tert-butyldimethylsilyl)indenyl) holmium bis(bis(dimethylsilyl)amide) complex {1,3-[(t-Bu)$Me_2Si]_2C_9H_5Ho[N(SiHMe_2)_2]_2$}, 0.0125 mmol of trityl tetrakis(pentafluorophenyl)borate $[Ph_3CB(C_6F_5)_4]$, 0.25 mmol of triisobutylaluminum, and 6.0 mmol of diisobutylaluminum hydride into a glass vessel in a glovebox under nitrogen atmosphere and dissolving the substances in 5 mL of toluene, to obtain a catalyst solution;

adding the catalyst solution thus obtained, to the 1L pressure-resistant glass reactor, and allowing a reaction to proceed for 900 minutes at 50 °C;

then stopping the reaction by adding an isopropanol solution (1 mL) of 5 mass % 2,2'-methylene-bis(4-ethyl-6-tert-butylphenol) (NS-5) to the 1L pressure-resistant glass reactor; and

isolating a polymer by using a large amount of methanol and vacuum-drying the resulting polymer at 50 °C, thereby obtaining 89 g of the polymer (polyisoprene) of Example 4.

(Example 5)

A polymer (polyisoprene) was obtained by: charging 34 g of toluene and 460 g of a toluene solution containing 100 g of isoprene into a thoroughly dry 1 L pressure-resistant glass reactor;

charging, on the other hand, 0.010 mmol of mono(1,3-bis(tert-butyldimethylsilyl)indenyl) gadolinium bis(bis(dimethylsilyl)amide) complex {1,3-[(t-Bu)$Me_2Si]_2C_9H_5Gd[N(SiHMe_2)_2]_2$}, 0.010 mmol of trityl tetrakis(pentafluorophenyl)borate $[Ph_3CB(C_6F_5)_4]$, 0.20 mmol of triisobutylaluminum, and 1.5 mmol of diisobutylaluminum hydride into a glass vessel in a glovebox under nitrogen atmosphere and dissolving the substances in 5 mL of toluene, to obtain a catalyst solution;

adding the catalyst solution thus obtained, to the 1L pressure-resistant glass reactor, and allowing a reaction to proceed for 240 minutes at the room temperature;

then stopping the reaction by adding an isopropanol solution (1 mL) of 5 mass % 2,2'-methylene-bis(4-ethyl-6-tert-butylphenol) (NS-5) to the 1L pressure-resistant glass reactor; and

isolating a polymer by using a large amount of methanol and vacuum-drying the resulting polymer at 50 °C, thereby obtaining 95 g of the polymer (polyisoprene) of Example 5.

(Example 6)

A polymer (polyisoprene) was obtained by: charging 34 g of toluene and 460 g of a toluene solution containing 100 g of isoprene into a thoroughly dry 1 L pressure-resistant glass reactor;

charging, on the other hand, 0.010 mmol of mono(1,3-bis(tert-butyldimethylsilyl)indenyl) gadolinium bis(bis(dimethylsilyl)amide) complex {1,3-[(t-Bu)$Me_2Si]_2C_9H_5Gd[N(SiHMe_2)_2]_2$}, 0.010 mmol of trityl tetrakis(pentafluorophenyl)borate $[Ph_3CB(C_6F_5)_4]$, 0.20 mmol of triisobutylaluminum, and 0.15 mmol of diisobutylaluminum hydride into a glass vessel in a glovebox under nitrogen atmosphere and dissolving the substances in 5 mL of toluene, to obtain a catalyst solution;

adding the catalyst solution thus obtained, to the 1L pressure-resistant glass reactor, and allowing a reaction to proceed for 900 minutes at the room temperature;

then stopping the reaction by adding an isopropanol solution (1 mL) of 5 mass % 2,2'-methylene-bis(4-ethyl-6-tert-butylphenol) (NS-5) to the 1L pressure-resistant glass reactor; and
isolating a polymer by using a large amount of methanol and vacuum-drying the resulting polymer at 50 °C, thereby obtaining 99 g of the polymer (polyisoprene) of Example 6.

< Analysis of polymers >

The weight-average molecular weight (Mw), the number-average molecular weight (Mn) and the molecular weight distribution (Mw/Mn) in terms of polystyrene, the weight-average absolute molecular weight (Mw'), the branching index treated by the weight average (the $g_w$ value), the vinyl bond content (1,2-vinyl bond content, 3,4-vinyl bond content), and the glass transition temperature (Tg) were measured for each of the polymers thus obtained, by the methods described below. The results are shown in Table 1.

(1) Weight-average molecular weight (Mw), number-average molecular weight (Mn) and molecular weight distribution (Mw/Mn) in terms of polystyrene The weight-average molecular weight (Mw), the number-average molecular weight (Mn) and the molecular weight distribution (Mw/Mn) in terms of polystyrene were determined, respectively, for each of the polymers thus obtained, relative to monodisperse polystyrene as a standard reference material, by using gel permeation chromatography [GPC: HLC-8320GPC manufactured by Tosoh Corporation, Column: $GMH_{HL} \times 2$ manufactured by Tosoh Corporation, Detector: a differential refractive index detector (RI)]. The measurement temperature was 40 °C, the measurement flow rate was 1 mL/minute, the mobile phase was tetrahydrofuran (THF), the concentration of the analyte solution was 1 mg/mL, and the injected amount was 100 μL.
(2) Weight-average absolute molecular weight (Mw'), branching index treated by the weight average ($g_w$ value)
The weight-average absolute molecular weight (Mw') was determined for each of the polymers thus obtained, by using gel permeation chromatography [GPC: HLC-8320GPC manufactured by Tosoh Corporation, Column: $GMH_{HL} \times 2$ manufactured by Tosoh Corporation, Detector: a differential refractive index detector (RI)] and a multi-angle light scattering detector (MALS: "Dawn Heleos II" manufactured by Wyatt Technology Corporation). Further, the branching index (the g value) was determined from the root-mean-square ($< Rg^2 >$) of a radius of gyration of the polymer and then the branching index treated by the weight average (the $g_w$ value) was calculated by subjecting the branching index (the g value) to weighting by the weight average.
(3) Vinyl bond content (1,2-vinyl bond content, 3,4-vinyl bond content) An NMR spectrum was obtained for each of the polymers thus prepared, by using an NMR ("AVANCE 600" manufactured by Bruker Analytik Gmbh). A 1,2-vinyl bond content and a 3,4-vinyl bond content were calculated, respectively, from the integration ratios of the peaks including: ($^1$H-NMR: $\delta$ 4.6-4.8 (=$CH_2$ of 3,4-vinyl unit), 5.0-5.2 (-CH= of 1,4-unit), 5.6-5.8 (-CH= of 1,2-unit), 4.8-4.9 (=$CH_2$ of 1,2-unit); and $^{13}$C-NMR: $\delta$ 23.4 (1,4-cis unit), 15.9 (1,4-trans unit), 18.6 (3,4-unit)) obtained by the measurement of $^1$H-NMR and $^{13}$C-NMR. The vinyl bond content of the polymer was calculated as the sum of the 1,2-vinyl bond content and the 3,4-vinyl bond content.
(4) Glass transition temperature (Tg)
The glass transition temperature (Tg) was measured for each of the polymers thus obtained, according to JIS K 7121-1987, by using a differential scanning calorimeter (DSC) "DSCQ2000" manufactured by TA Instruments Japan.

(Comparative Example 1)

The weight-average molecular weight (Mw), the number-average molecular weight (Mn) and the molecular weight distribution (Mw/Mn) in terms of polystyrene, the weight-average absolute molecular weight (Mw'), the branching index treated by the weight average (the $g_w$ value), the vinyl bond content (1,2-vinyl bond content, 3,4-vinyl bond content), and the glass transition temperature (Tg) were measured, respectively, for the product name "Isogrip" manufactured by KARBOCHEM Ltd. by the methods described above. The results are shown in Table 1.

[Table 1]

| | | Comp. Example 1 | Example 1 | Example 2 | Example 3 | Example 4 | Example 5 | Example 6 |
|---|---|---|---|---|---|---|---|---|
| Weight-average molecular weight in terms of polystyrene (Mw) | $\times 10^3$ | 740 | 460 | 510 | 680 | 790 | 370 | 1340 |

(continued)

| | | Comp. Example 1 | Example 1 | Example 2 | Example 3 | Example 4 | Example 5 | Example 6 |
|---|---|---|---|---|---|---|---|---|
| Number-average molecular weight in terms of polystyrene (Mn) | $\times 10^3$ | 300 | 240 | 210 | 270 | 310 | 170 | 700 |
| Molecular weight distribution (Mw/Mn) | - | 2.50 | 1.90 | 2.40 | 2.50 | 2.60 | 2.18 | 1.91 |
| Weight-average absolute molecular weight (Mw') | $\times 10^3$ | 635 | 334 | 393 | 504 | 574 | 268 | 792 |
| Weight-average absolute molecular weight (Mw')/Weight-average molecular weight in terms of polystyrene (Mw) | - | 0.858 | 0.726 | 0.771 | 0.741 | 0.727 | 0.724 | 0.591 |
| Branching index ($g_w$ value) treated by the weight average | - | 0.41 | 0.44 | 0.47 | 0.50 | 0.47 | 0.44 | 0.58 |
| Vinyl bond content | mol% | 59 | 58 | 67 | 75 | 75 | 56 | 56 |
| 1,2-vinyl bond content | mol% | 2.1 | 0 | 0 | 0 | 0 | 0 | 0 |
| 3,4-vinyl bond content | mol% | 57 | 58 | 67 | 75 | 75 | 56 | 56 |
| Glass transition temperature | °C | -11 | -17 | -6 | -2 | 2 | -17 | -17 |

It is understood from Table 1 that the commercially available polyisoprene of Comparative Example 1, although it has a high vinyl bond content, exhibits a ratio of the weight-average absolute molecular weight with respect to the weight-average molecular weight in terms of polystyrene [(weight-average absolute molecular weight (Mw'))/(weight-average molecular weight in terms of polystyrene (Mw))] exceeding 0.850, thereby indicating a high degree of branching thereof.
In contrast, each of the polyisoprenes of Examples obtained by the polyisoprene production method of the present disclosure has a vinyl bond content of ≥ 30 mol % and a ratio of the weight-average absolute molecular weight with respect to the weight-average molecular weight in terms of polystyrene [(weight-average absolute molecular weight (Mw'))/(weight-average molecular weight in terms of polystyrene (Mw))] of ≤ 0.850, thereby indicating a low degree of branching thereof.

< Preparation of rubber composition and evaluation thereof >

Rubber composition samples were manufactured by using a conventional Banbury mixer according to the blend formulation shown in Table 2. The rubber composition samples thus obtained were subjected to vulcanization at 145 °C for 33 minutes, respectively, whereby vulcanized rubber test pieces were prepared. Each of the vulcanized rubber

test pieces was evaluated for the fuel-saving performance and grip performance on a wet road surface thereof by the methods described below. The results are shown in Table 3.

(5) Fuel-saving performance

Tanδ (loss tangent) at 50 °C was measured for each of the vulcanized rubber test pieces by using "ARESG2" manufactured by TA Instruments Japan under the conditions of strain: 0.1 % to 30 % and frequency: 15 Hz. The tanδ value thus measured was converted to the multiplicative inverse thereof and then the multiplicative inverse was expressed, as the fuel-saving performance, by an index relative to the multiplicative inverse of tanδ at strain: 10 % of Comparative Example 2 being "100". The larger index represents the smaller tanδ (i.e., the lower hysteresis loss) and thus the better fuel-saving performance.

(6) Grip performance on wet road surface

Each of the vulcanized rubber test pieces was rubbed against a wet road surface and resistance experienced by the test piece was measured by using a British portable skid resistance tester (BPST) at 23 °C. The resistance value thus measured was expressed by an index relative to the resistance value of Comp. Example 2 being "100". The larger index value represents the larger resistance and thus the better grip performance on a wet road surface.

[Table 2]

| Blend formulation | Parts by mass |
|---|---|
| Rubber component *1 | 100 |
| Silica *2 | 55 |
| aromatic oil *3 | 10 |
| Silane coupling agent *4 | 4.4 |
| Stearic acid | 2 |
| Wax *5 | 2 |
| Antioxidant *6 | 1 |
| Sulfur | 1.2 |
| Vulcanization accelerator DPG *7 | 1.12 |
| Vulcanization accelerator DM * 8 | 1.6 |
| Vulcanization accelerator NS *9 | 0.56 |
| Zinc white | 2.5 |

*1 Rubber component: the rubber components used in Comp. Examples 2, 3 and Examples 7, 8 are shown in Table 3, respectively.
*2 Silica: product name "Nipsil AQ" manufactured by Toso Silica Corporation
*3 Aromatic oil: product name "AROMAX #3" manufactured by Fuji Kosan Co., Ltd.
*4 Silane coupling agent: bis(3-triethoxysilylpropyl)disulfide (the average sulfur chain length: 2.35), product name "Si75®" manufactured by Evonic Industries, AG
*5 Wax: microcrystalline wax, manufactured by Seiko Chemical Co., Ltd.
*6 Antioxidant: N-(1,3-dimethylbutyl)-N'-phenyl-p-phenylenediamine, product name "Nocrac 6C" manufactured by Ouchi-Shinko Chemical Industrial Co., Ltd.
*7 Vulcanization accelerator DPG: 1,3-diphenylguanidine, product name "Sanceler D" manufactured by SANSHIN CHEMICAL INDUSTRY CO.,LTD.
*8 Vulcanization accelerator DM: di-2-benzothiazolyl disulfide, product name "Sanceler DM" manufactured by SANSHIN CHEMICAL INDUSTRY CO.,LTD.
*9 Vulcanization accelerator NS: N-tert-butyl-2-benzothiazolylsulphenamide, product name "Sanceler NS" manufactured by SANSHIN CHEMICAL INDUSTRY CO.,LTD.

[Table 3]

| | | | Comp. Example 2 | Comp. Example 3 | Example 7 | Example 8 |
|---|---|---|---|---|---|---|
| Types of rubber component | | | SBR *10 | Polyisoprene of Comp. Example 1 | Polyisoprene of Example 5 | Polyisoprene of Example 6 |
| Evaluation | Fuel-saving performance | Index | 100 | 82 | 86 | 101 |
| | Grip performance on wet road surface | Index | 100 | 121 | 124 | 132 |
| | Fuel-saving performance index + Grip performance on wet road surface index | Index | 200 | 203 | 210 | 233 |

*10 SBR: product name "#1500" manufactured by JSR Corporation, the weight-average molecular weight (Mw) in terms of polystyrene = 519 $\times 10^3$, the number-average molecular weight (Mn) in terms of polystyrene = 150 $\times 10^3$, the molecular weight distribution (Mw/Mn) = 3.46, the content of styrene bond = 23.5 mass %, the vinyl bond content in butadiene portions = 16 mol %, the glass transition temperature (Tg) = –56 °C

It is understood from Table 3 that each of the rubber compositions of Examples, containing the polyisoprene obtained by the polyisoprene production method of the present disclosure, is excellent in the fuel-saving performance and grip performance on a wet road surface, as compared with each of the rubber compositions containing the conventional polyisoprene (manufactured by the conventional method).

INDUSTRIAL APPLICABILITY

The method for manufacturing a polyisoprene of the present disclosure is applicable to manufacturing a polyisoprene which can be used as a rubber component of a rubber composition.

## Claims

1. A method for manufacturing a polyisoprene, wherein it comprises a process of polymerizing isoprene under the presence of a polymerization catalyst composition containing a half metallocene cation complex represented by following general formula (I)

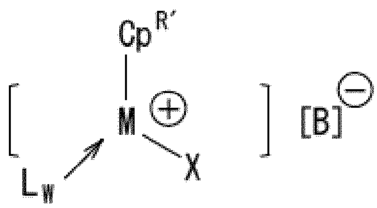

· · · (I)

(In formula (I), M represents a lanthanoid element, scandium or yttrium; $Cp^{R'}$ represents substituted cyclopentadienyl, substituted indenyl or substituted fluorenyl; X represents hydrogen atom, halogen atom, alkoxy, thiolate, amide, silyl, or a $C_{1-20}$ monovalent hydrocarbon group; L represents a neutral Lewis base; w represents an integer in the range of 0 to 3; and $[B]^-$ represents a non-coordinating anion),
wherein each of the substituted cyclopentadienyl, the substituted indenyl or the substituted fluorenyl as $Cp^{R'}$ in general formula (I) has at least one substituent group including Si therein.

2. The method for manufacturing a polyisoprene of claim 1, wherein $Cp^{R'}$ in general formula (I) is substituted indenyl and the substituted indenyl has two or more substituent groups.

3. The method for manufacturing a polyisoprene of claim 1 or 2, wherein $Cp^{R'}$ in general formula (I) is substituted indenyl and at least one substituent group of the substituted indenyl exists on the five-membered ring of the substituted indenyl.

4. The method for manufacturing a polyisoprene of any of claims 1 to 3, wherein the polymerization catalyst composition contains no halogen compound.

FIG. 1

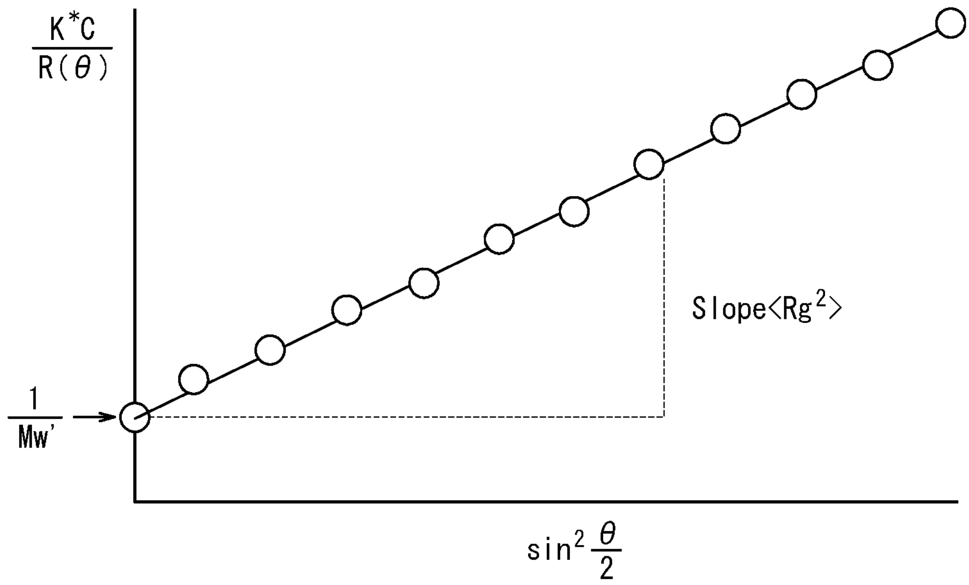

**INTERNATIONAL SEARCH REPORT**

International application No. PCT/JP2020/003030

A. CLASSIFICATION OF SUBJECT MATTER
Int.Cl. C08F136/08(2006.01)i, C08F4/6192(2006.01)i
FI: C08F136/08, C08F4/6192

According to International Patent Classification (IPC) or to both national classification and IPC

B. FIELDS SEARCHED

Minimum documentation searched (classification system followed by classification symbols)
Int.Cl. C08F136/08, C08F4/6192

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | DU, G. X. et al., Copolymerization of isoprene with ethylene catalyzed by cationic half-sandwich fluorenyl scandium catalysts, Journal of Polymer Science, Part A: Polymer Chemistry, 2015, 53, 2898-2907, DOI:10.1002/pola.27769, table 1 | 1, 4 |
| X | ZHANG, L. X. et al., Unprecedented isospecific 3,4-polymerization of isoprene by cationic rare earth metal alkyl species resulting from a binuclear precursor, Journal of the American Chemical Society, 2005, 127, 14562-14563, DOI:10.1021/ja055397r, chart 1, table 1 | 1, 4 |
| X | CHEN, J. Z. et al., Metal and counteranion nuclearity effects in organoscandium-catalyzed isoprene polymerization and copolymerization, ACS Catalysis, 2017, 7, 5214-5219, DOI:10.1021/acscatal.7b01621, chart 1, table 1 | 1, 4 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25.03.2020 | 07.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | <br>Telephone No. |

Form PCT/ISA/210 (second sheet) (January 2015)

INTERNATIONAL SEARCH REPORT

International application No. PCT/JP2020/003030

C (Continuation). DOCUMENTS CONSIDERED TO BE RELEVANT

| Category* | Citation of document, with indication, where appropriate, of the relevant passages | Relevant to claim No. |
|---|---|---|
| X | WO 2007/129670 A1 (INSTITUTE OF PHYSICAL & CHEMICAL RESEARCH) 15.11.2007 (2007-11-15), claims, paragraphs [0012]-[0017], [0032], [0034], examples | 1-4 |
| A | LI, X. F. et al., Alternating and random copolymerization of isoprene and ethylene catalyzed by cationic half-sandwich scandium alkyls, Journal of the American Chemical Society, 2009, 131, 13870-13882, DOI:10.1021/ja9056213, entire text | 1-4 |
| A | PAN, L. et al., Chain-shuttling polymerization at two different scandium sites: regio- and stereospecific "One-Pot" block copolymerization of styrene, isoprene, and butadiene, Angewandte Chemie, International Edition, 50, 2011, 12012-12015, DOI:10.1002/anie.201104011, entire text | 1-4 |
| A | LIU, S. Q. et al., Cationic tropidinyl scandium catalyst: a perfectly acceptable substitute for cationic half-sandwich scandium catalysts in cis-1,4-polymerization of isoprene and copolymerization with norbornene, Macromolecules, 2014, 47, 3567-3573, DOI:10.1021/ma500740m, entire text | 1-4 |
| A | JP 2008-266523 A (INSTITUTE OF PHYSICAL & CHEMICAL RESEARCH) 06.11.2008 (2008-11-06), entire text | 1-4 |
| P, A | WO 2019/111495 A1 (BRIDGESTONE CORPORATION) 13.06.2019 (2019-06-13), entire text | 1-4 |

Form PCT/ISA/210 (second sheet) (January 2015)

**INTERNATIONAL SEARCH REPORT**
Information on patent family members

International application No.
PCT/JP2020/003030

| | | |
|---|---|---|
| WO 2007/129670 A1 | 15.11.2007 | US 2009/0264604 A1<br>claims,<br>paragraphs [0091]-[0109],<br>[0018], examples<br>EP 2017280 A1<br>KR 10-2009-0024144 A<br>CN 101443343 A<br>KR 10-2014-0097561 A |
| JP 2008-266523 A | 06.11.2008 | (Family: none) |
| WO 2019/111495 A1 | 13.06.2019 | JP 2019-99721 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1174547 A